# EUROPEAN PATENT APPLICATION

(11) **EP 3 056 186 A1**
(43) Date of publication of application: **17.08.2016**
(21) Application number: 13895409.4
(22) Date of filing: 09.10.2013
(51) Int. Cl.: A61J 3/00

(54) **MEDICINE FILLING DEVICE**

(71) Applicant: TAKAZONO TECHNOLOGY INCORPORATED, Osaka 573-0128 (JP)
(72) Inventor: TAKAHAMA, Makio, Hirakata-shi Osaka 573-0128 (JP); KANEMOTO, Hirotsugu, Hirakata-shi Osaka 573-0128 (JP)
(74) Representative: Isarpatent
(86) International application number: PCT/JP2013/077471
(87) International publication number: WO 2015/052794

(57) **Abstract**

Provided is a medicine filling apparatus used for filling a medicine container with solid medicines, the medicine filling apparatus including: a medicine housing unit configured to house the medicines; a plurality of rotors configured to eject the medicines from the medicine housing unit by rotating; a medicine guide path configured to guide the medicines ejected from the medicine housing unit by the plurality of rotors to the medicine container; a drive unit configured to rotationally drive the plurality of rotors; and a control unit configured to control the drive unit.

## Description

### FIELD

The present invention relates to a medicine filling apparatus used for filling a medicine container with solid medicines.

### BACKGROUND

A pharmacist may provide a patient with solid medicines such as tablets according to a prescription by a doctor. In order to provide the patient with the medicines, the pharmacist may package the medicines separately by the type and amount of one-time dose (separate package) in some cases, or the pharmacist may fill a medicine container such as a vial container with the medicines collectively in other cases.

As an apparatus for filling a vial container with medicines, a tablet packing apparatus disclosed in JP H10-258801 A (Patent Literature 1), for example, can be mentioned. The tablet packing apparatus includes a tablet feeder capable of delivering tablets in an amount according to the prescription to the vial container. The tablet feeder includes a housing body that houses tablets, and a rotor rotatably located within the housing body. As the rotor rotates, the tablets can be sequentially ejected from an outlet provided in the housing body. The ejected tablets are delivered to the vial container after being counted by a tablet passage sensor provided in the tablet packing apparatus.

The vial container is filled with a lot of tablets. Therefore, in order to reduce the time required for filling operation, the rotor needs to rotate at high speed.

However, when the rotor rotates at high speed, there is a possibility of failure of filling in an exact quantity due to the tablets jamming within the tablet feeder or counting errors occurring in the tablet passage sensor.

JP H7-165203 A (Patent Literature 2) discloses providing two rotors in one tablet feeder. However, with the configuration disclosed in Patent Literature 2, packaging apparatuses are separately connected to the respective rotors. Therefore, in attempts to rotate the rotor at high speed for reducing the time required for filling operation, filling in an exact quantity may be failed due to the tablets jamming within the tablet feeder or counting errors occurring in the tablet passage sensor, like in the configuration of Patent Literature 1.

Further, JP S60-225561 A (Patent Literature 3) discloses that tablets can be ejected simultaneously from a plurality of grouped tablet feeders. However, with the configuration disclosed in Patent Literature 3, pharmacists or others need to manage the plurality of grouped tablet feeders. Therefore, as compared with the case of managing a plurality of non-grouped tablet feeders, it may possibly be complicated for pharmacists or others to manage the tablet feeders.

### CITATION LIST

### Patent Literature

Patent Literature 1: JP H10-258801 A
Patent Literature 2: JP H7-165203 A
Patent Literature 3: JP S60-225501 A

### SUMMARY

### Technical Problem

It is therefore an object of the present invention to provide a medicine filling apparatus that is capable of reducing the time required for filling operation and filling a medicine container with medicines in an exact quantity, in which the management is not complicated.

### Solution to Problem

The present invention is a medicine filling apparatus used for filling a medicine container with solid medicines, including: a medicine housing unit configured to house the medicines; a plurality of rotors located within the medicine housing unit and configured to eject the medicines from the medicine housing unit by rotating; a medicine guide path configured to guide the medicines ejected from the medicine housing unit by the plurality of rotors to the medicine container; a drive unit configured to rotationally drive the plurality of rotors; and a control unit configured to control the drive unit.

Further, the configuration may be such that the medicine filling apparatus further includes a detection unit configured to detect the medicines passing through the medicine guide path, and the control unit controls the drive unit based on detection signals from the detection unit so that, when the cumulative number of the medicines passing through the medicine guide path from the start of filling the medicine container has reached a specific number close to the designated number that has been designated in advance as the number of the medicines with which the medicine container is filled, one of the plurality of rotors can eject the medicines while the other rotor cannot eject the medicines.

Further, the configuration may be such that the control unit controls the drive unit based on detection signals from the detection unit so that, when the cumulative number of the medicines passing through the medicine guide path from the start of filling the medicine container has reached a specific number close to the designated number that has been designated in advance as the number of the medicines with which the medicine container is filled, only one of the plurality of rotors keeps rotating while the other rotor keeps stopping.

Further, the configuration may be such that the control unit controls the drive unit based on detection signals from the detection unit so that, when the cumulative number of the medicines passing through the medicine guide path from the start of filling the medicine container has reached a specific number close to the designated number that has been designated in advance as the number of the medicines with which the medicine container is filled, the plurality of rotors alternately rotate by shifting the time while the other rotor than the rotating rotor stops.

Further, the configuration may be such that the number of the plurality of rotors is two.

### BRIEF DESCRIPTION OF DRAWINGS

Fig. 1 is a vertical end face view in the width direction showing a medicine housing unit used for a medicine filling apparatus according to an embodiment of the present invention.
Fig. 2 is a vertical end face view in the depth direction showing the medicine housing unit used for the medicine filling apparatus.
Fig. 3 is a perspective view showing a rotor of the medicine filling apparatus.
Fig. 4A is a schematic view showing the configuration of the medicine filling apparatus.
Fig. 4B is a block diagram of the medicine filling apparatus.
Fig. 5A is a timing chart showing a first control of the medicine filling apparatus.
Fig. 5B is a timing chart showing a second control of the medicine filling apparatus.
Fig. 6 is a flowchart showing the first control.
Fig. 7 is a flowchart showing the process of a first rotor in the first control.
Fig. 8 is a flowchart showing the process of a second rotor in the first control.
Fig. 9 is a flowchart showing the second control.
Fig. 10 is a flowchart showing the process of the first rotor in the second control.
Fig. 11 is a flowchart showing the process of the second rotor in the second control.

### DESCRIPTION OF EMBODIMENTS

Next, the present invention is described with reference to an embodiment of a medicine filling apparatus. The medicine filling apparatus includes a medicine cassette 1 as a medicine housing unit, a drive unit 2, a control unit 3, a medicine guide path 4, a medicine container arranging unit 5, and a medicine passage sensor 6 as a detection unit.

The medicine cassette 1, which corresponds to the tablet feeder disclosed in Patent Literatures 1 to 3 above, is in the form of a box made of resin or the like, and can house a plurality of tablets M and appropriately eject them. The medicine cassette 1 is replaceable on a base (not shown) provided in the body of the medicine filling apparatus. The medicine cassette 1 houses a single kind of tablets M.

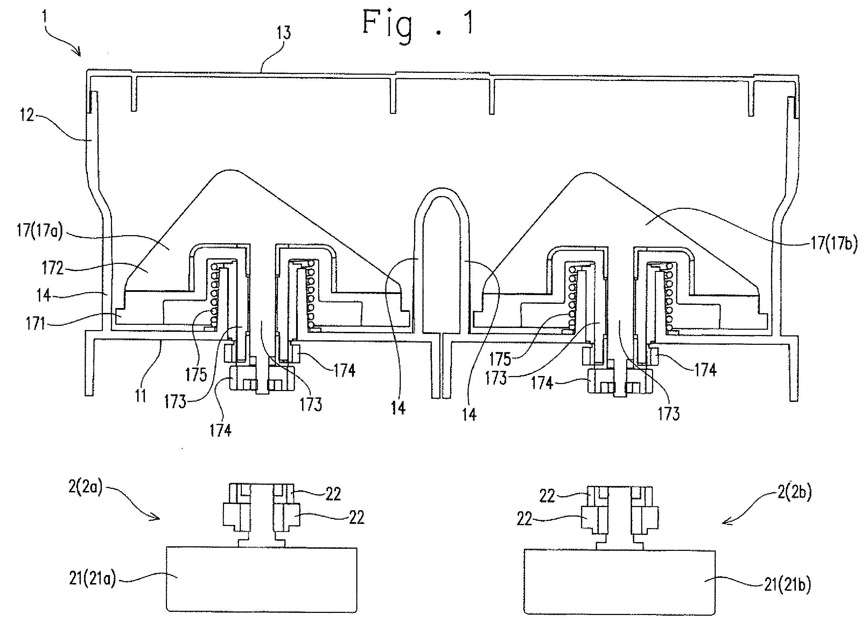

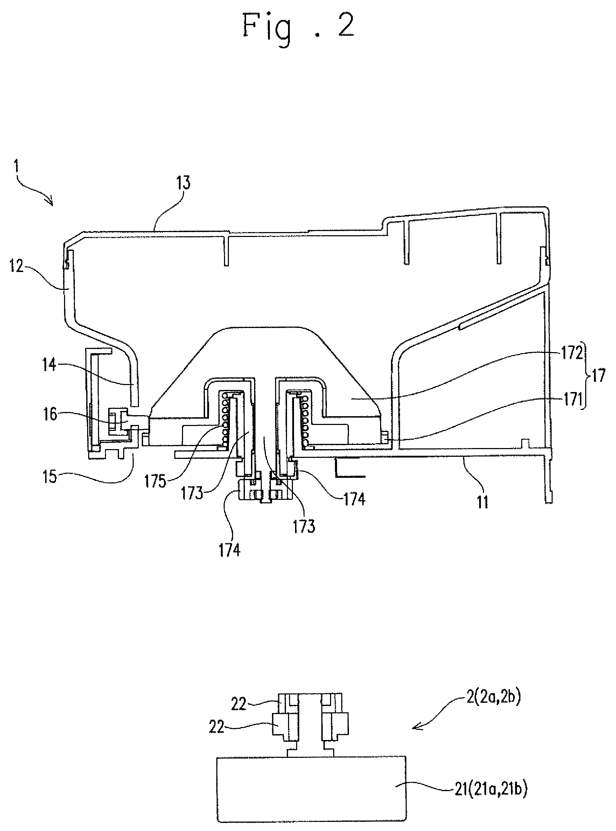

As shown in Fig. 1 and Fig. 2, the medicine cassette 1 has a bottom wall 11 and side walls 12 raised upward from the bottom wall 11, and a cover 13 is detachably attached onto the top of the side walls 12. Further, cylindrical parts 14 each having an inner circumferential surface with a diameter slightly larger than the outer diameter of a lower disk part 171 of a rotor 17 are formed on the bottom wall 11. The rotor 17 is located inside each of the cylindrical parts 14.

A medicine outlet 15 is formed in a portion on the bottom wall 11 that is surrounded by each cylindrical part 14, more specifically, a portion adjacent to the inner circumferential surface of the cylindrical part 14. The medicine cassette 1 of this embodiment is provided with two rotors 17 (a first rotor 17a and a second rotor 17b), and therefore medicine outlets 15 are formed at two points corresponding to the respective rotors 17 per the medicine cassette 1. There is no limitation to this, and the configuration may be such that the two rotors 17 share a medicine outlet 15 at one point, for example.

As shown in Fig. 2, a partition plate 16 extending in the horizontal direction is provided above the medicine outlet 15 so as to project in the radially inward direction from the inner circumferential surface of the cylindrical part 14. The partition plate 16 covers over the medicine outlet 15, thereby preventing two or more tablets M from falling into the medicine outlet 15 at a time.

Further, the rotor 17 configured to rotate about the vertical axis is provided on the bottom wall 11 of the medicine cassette 1. A rotation shaft 173 of the rotor 17 passes through the bottom wall 11. The rotation shaft 173 is provided with a driven gear 174 to which a driving force for rotationally driving the rotor 17 is transmitted from the drive unit 2 below the bottom wall 11. Further, the rotor 17 is biased upward by a spring 175.

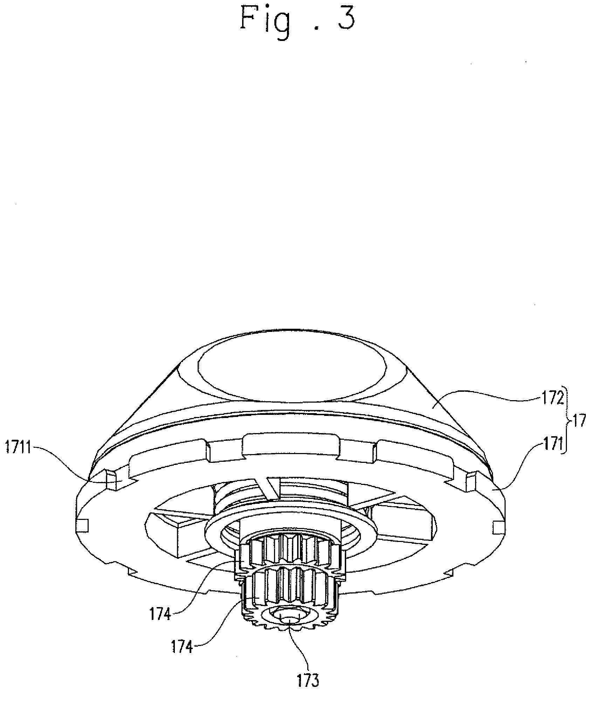

As shown in Fig. 3, the rotor 17 includes the lower disk part 171 and an upper bulging part 172. Although the lower disk part 171 and the upper bulging part 172 are separate and are configured to rotate separately in this embodiment, they may be integrated. In order to allow the lower disk part 171 and the upper bulging part 172 to rotate separately, the rotation shaft 173 includes inner and outer double shafts, and the driven gear 174 is provided for each shaft.

The upper bulging part 172 has a shape rising upward at a radially inward position and has a surface inclined downward to a radially outward position. This shape allows the tablets M to slip down on the inclined surface, so that the tablets M housed in the medicine cassette 1 can be smoothly introduced downward. The lower disk part 171 has a substantially circular cross section and has a plurality of medicine receiving recesses 1711 that are formed in the circumferential direction to be recessed in the radially inward direction. The tablets M are fitted into the respective medicine receiving recesses 1711. With such a state, the rotor 17 rotates. Since the partition plate 16 prevents two or more tablets M from falling into the medicine outlet 15 at a time, the tablets M move (fall) into the medicine outlet 15 one by one, as the rotor 17 rotates with the tablets M being fitted into the medicine receiving recesses 1711.

The drive unit 2 is located in the base (not shown) provided in the body of the medicine filling apparatus. As shown in Fig. 1 and Fig. 2, the drive unit 2 includes a motor 21 as a driving source, and a drive gear 22 as a power transmission mechanism to which a driving force is transmitted from the motor 21. The drive gear 22 meshes with the driven gear 174 of the medicine cassette 1 when the medicine cassette 1 is attached to the body of the medicine filling apparatus. Further, the drive unit 2 is constituted by a first drive unit 2a and a second drive unit 2b so as to be capable of separately driving the first rotor 17a and the second rotor 17b that are located in one unit of the medicine cassette 1. In this embodiment, the first drive unit 2a corresponds to the first rotor 17a, and the second drive unit 2b corresponds to the second rotor 17b. The drive unit 2 (the first drive unit 2a and the second drive unit 2b) is controlled by the control unit 3 so as to rotate the rotor 17 and stop the rotation. The medicines can be ejected from the medicine cassette 1 to the medicine guide path 4 by the drive unit 2.

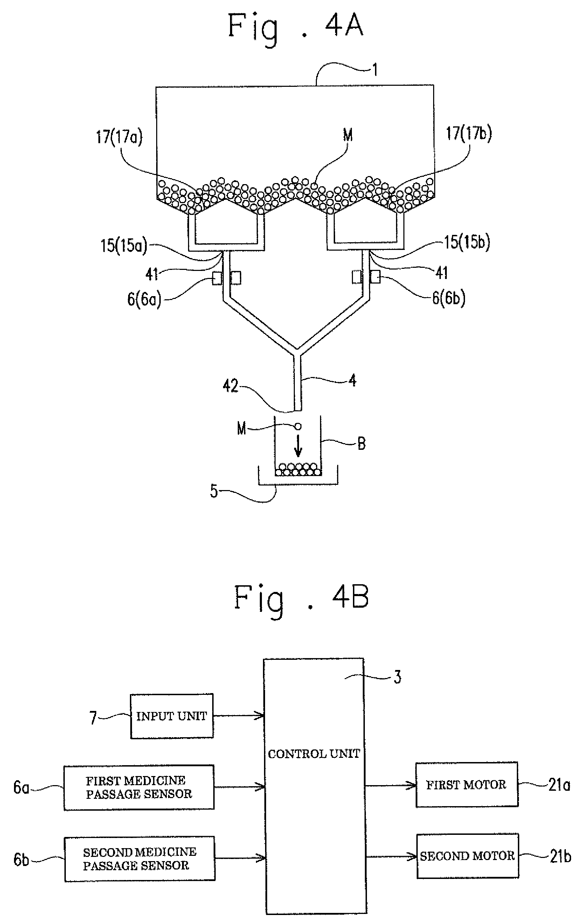

The medicine guide path 4 is located in the body of the medicine filling apparatus and is a path connecting the medicine outlet 15 of the medicine cassette 1 and the medicine container arranging unit 5 in which a medicine container B such as a vial container is arranged, as shown in Fig. 4A. The medicines ejected from the medicine cassette 1 move to the opening of the medicine container B passing through the medicine guide path 4. The medicine guide path 4 has a plurality of inlets 41 located corresponding to the medicine outlets 15 of the medicine housing unit to have plural lines of the path. Then, these lines merge in the middle, and an outlet 42 that is open into the medicine container B is provided at one point. Therefore, the tablets M falling from the first rotor 17a and the second rotor 17b are put into the medicine container B from the outlet 42 at one point, passing through the medicine guide path 4.

As shown in Fig. 4A, a medicine passage sensor 6 serving as the detection unit configured to detect the tablets M passing therethrough is provided in a portion of the medicine guide path 4 located in the base (not shown) provided in the body of the medicine filling apparatus. The detection signals of the medicine passage sensor 6 are sent to the control unit 3 as shown in Fig. 4B. A first medicine passage sensor 6a is provided corresponding to the medicine outlet 15a on the first rotor side, and a second medicine passage sensor 6b is provided corresponding to the medicine outlet 15b on the second rotor side. The medicine passage sensors 6 respectively detect the tablets M ejected by the rotors 17 from the medicine outlets 15.

In this embodiment, the two rotors 17 (the first rotor 17a and the second rotor 17b) are provided in one unit of the medicine cassette 1, as described above. The control of the first rotor 17a and the second rotor 17b by the control unit 3 will be described below.

First, the first rotor 17a and the second rotor 17b rotate at the beginning of filling. Therefore, as compared with a medicine cassette in which only one rotor is provided per unit, as in conventional technique, the tablets M can be filled twice computationally, even if the rotational speed of the rotor 17 is the same as in conventional technique. Accordingly, the filling time can be reduced.

Next, in the case where the control unit 3 determines that the cumulative number of the medicines passing through the medicine guide path 4 from the start of filling the medicine container B with the tablets M has reached a specific number close to the number designated in advance by being input from an input unit 7 such as a touch panel and a ten key (the designated number) as the number of the tablets M with which the medicine container B is filled, based on the detection by the medicine passage sensor 6, the control unit 3 controls the drive unit 2 so that one of the plurality of rotors 17 can eject the medicines while the other rotor 17 cannot eject the medicines. In this embodiment, the difference between the designated number and the specific number is set to 10, and when this difference is equal to or less than 10 (see steps S147, S237, and S247 below), the control is performed. Specifically, the control unit 3 controls the drive unit 2 so that one of the plurality of rotors 17 rotates while the other rotor 17 stops. This control enables the tablets M to fall from the two rotors 17 one by one without falling at a time, therefore enabling error-free filling, for example, in the designated number corresponding to the prescribed amount. Further, as compared with a medicine cassette in which only one rotor is provided per unit, high-speed filling is possible with relatively low rotational speed, and therefore jamming of the tablets M within the medicine cassette 1 or the occurrence of counting errors of the medicine passage sensor 6 can be suppressed. As the rotating and stopping control, two controls will be exemplified below.

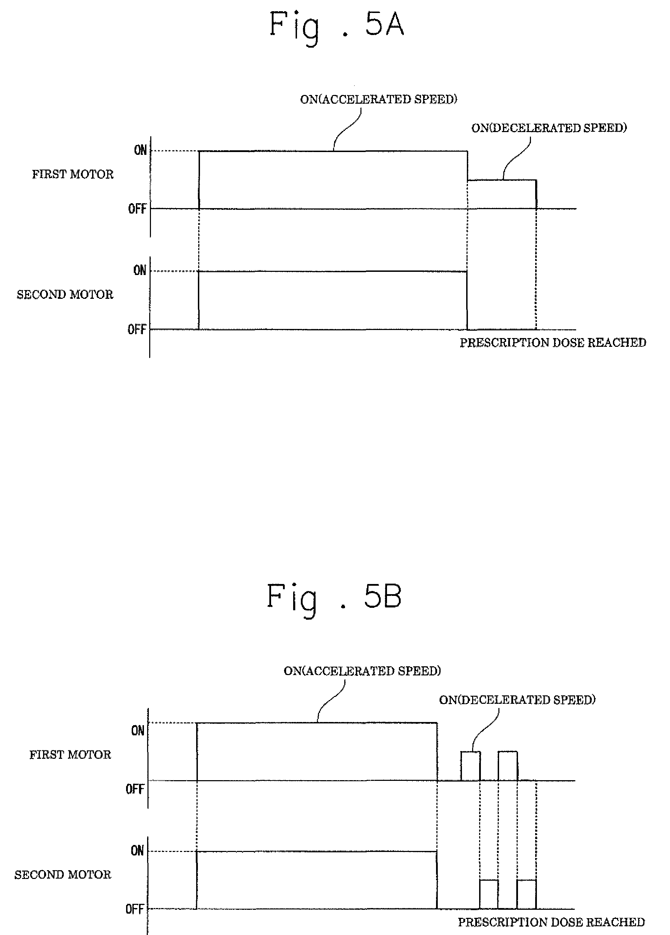

As shown in the timing chart of Fig. 5A, the control unit 3 controls the drive unit 2 in the first control so that, in the case where the control unit 3 determines that the cumulative number of the medicines passing through the medicine guide path 4 has reached a specific number close to the designated number (step S147 below), only one of the first rotor 17a and the second rotor 17b keeps rotating (decelerated rotation) while the other rotor keeps stopping.

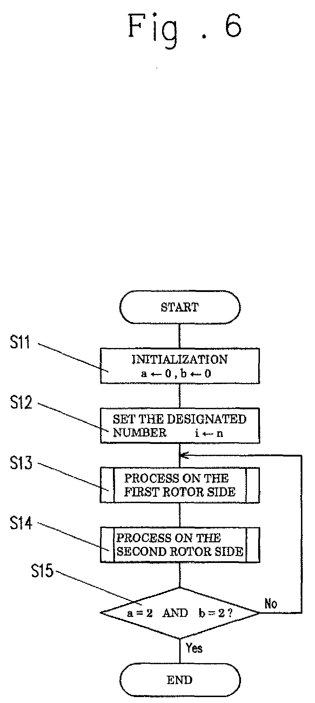

The process flow of the first control will be described with reference to the flowchart. In the following determination, the subject of the determination is the control unit 3 (the same applies to the following descriptions). According to a main flow, first, as shown in Fig. 6, initialization to set variables a and b to 0 is performed (step S11). Next, the designated number n is set to a variable i (step S12). Then, the process of the first rotor 17a is performed (step S13), and subsequently the process of the second rotor 17b is performed (step S14). Then, if the variables a and b are determined to be 2 (step S15) and YES is determined, the process ends. If NO is determined, the process returns to step S13.

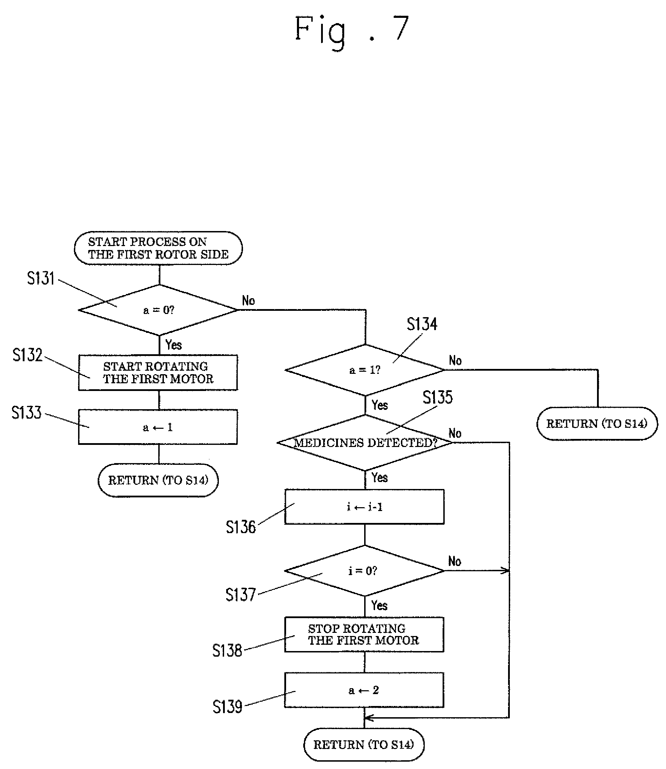

Next, the process of the first rotor 17a (step S13) will be described with reference to Fig. 7. First, whether the variable a is 0 is determined (step S131). If YES is determined, the first motor 21a of the first drive unit 2a starts rotating (step S132). Then, the variable a is set to 1 (step S133). Further, the process proceeds to the process of the second rotor 17b (step S14).

On the other hand, if NO is determined in step S131, whether the variable a is 1 is determined (step S134). If NO is determined, the process proceeds to the process of the second rotor 17b (step S14). If YES is determined, whether the medicine passage sensor 6 has detected the medicines passing through the medicine guide path 4 is determined (step S135). If YES is determined, the variable i is reduced by one (step S136). If NO is determined, the process proceeds to the process of the second rotor 17b (step S14).

Subsequent to step S136, whether the variable i is 0 is determined (step S137). If NO is determined, the process proceeds to the process of the second rotor 17b (step S14). If YES is determined, the first motor 21a of the first drive unit 2a stops rotating (step S138). Then, the variable a is set to 2 (step S139), and the process proceeds to the process of the second rotor 17b (step S14).

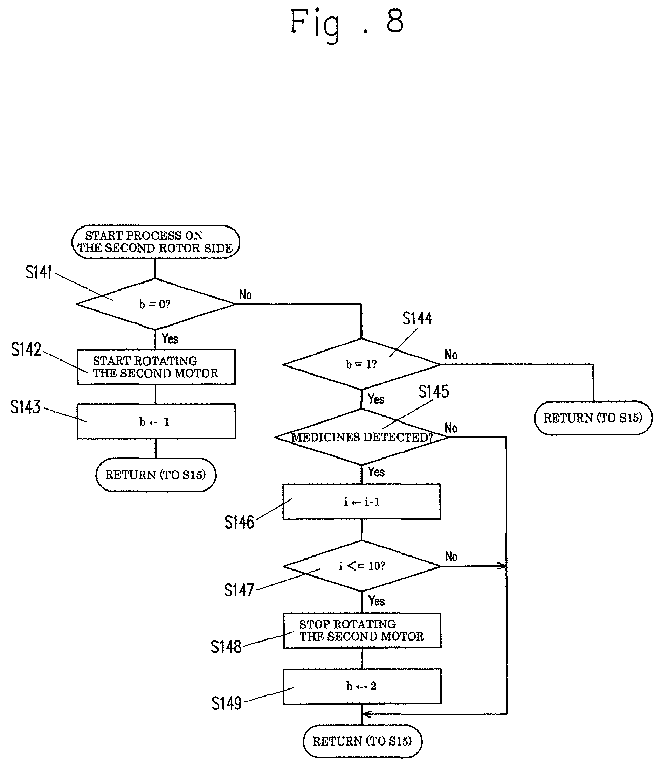

Next, the process of the second rotor 17b (step S14) will be described with reference to Fig. 8. First, whether the variable b is 0 is determined (step S141). IfYES is determined, the second motor 21b of the second drive unit 2b starts rotating (step S142). Then, the variable b is set to 1 (step S143). Further, the process proceeds to step S15.

On the other hand, if NO is determined in step S141, whether the variable b is 1 is determined (step S144). If NO is determined, the process proceeds to step S15. IfYES is determined, whether the medicine passage sensor 6 has detected the medicines passing through the medicine guide path 4 is determined (step S145). If YES is determined, the variable i is reduced by one (step S146). If NO is determined, the process proceeds to step S15.

Subsequent to step S146, whether the variable i is equal to or less than 10 (in the case where the difference between the designated number and the specific number is set to 10) is determined (step S147). If NO is determined, the process proceeds to step S15. If YES is determined, the second motor 21b of the second drive unit 2b stops rotating (step S148). This allows the second motor 21b to stop earlier than the first motor 21a. Then, the variable b is set to 2 (step S149), and the process proceeds to step S15.

As shown in the timing chart of Fig. 5B, the control unit 3 controls the drive unit 2 in the second control so that, in the case where the control unit 3 determines that the cumulative number of the medicines passing through the medicine guide path 4 has reached a specific number close to the designated number (step S237 and S247 below), the first rotor 17a and the second rotor 17b alternately rotate by shifting the time (decelerated rotation).

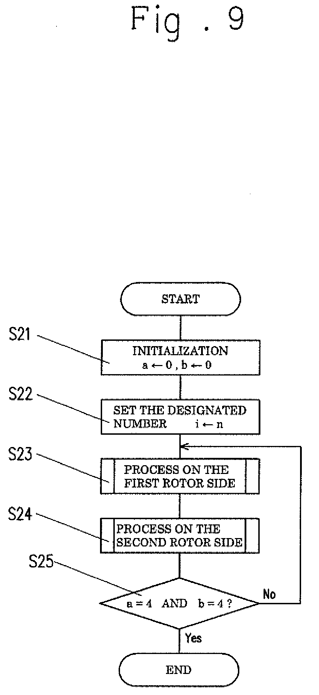

The process flow of the second control will be described with reference to the flowchart. According to a main flow, first, as shown in Fig. 9, initialization to set the variables a and b to 0 is performed (step S21). Next, the designated number n is set to a variable i (step S22). Then, the process of the first rotor 17a is performed (step S23), and subsequently the process of the second rotor 17b is performed (step S24). Then, if the variables a and b are determined to be 4 (step S25) and YES is determined, the process ends. If NO is determined, the process returns to step S23.

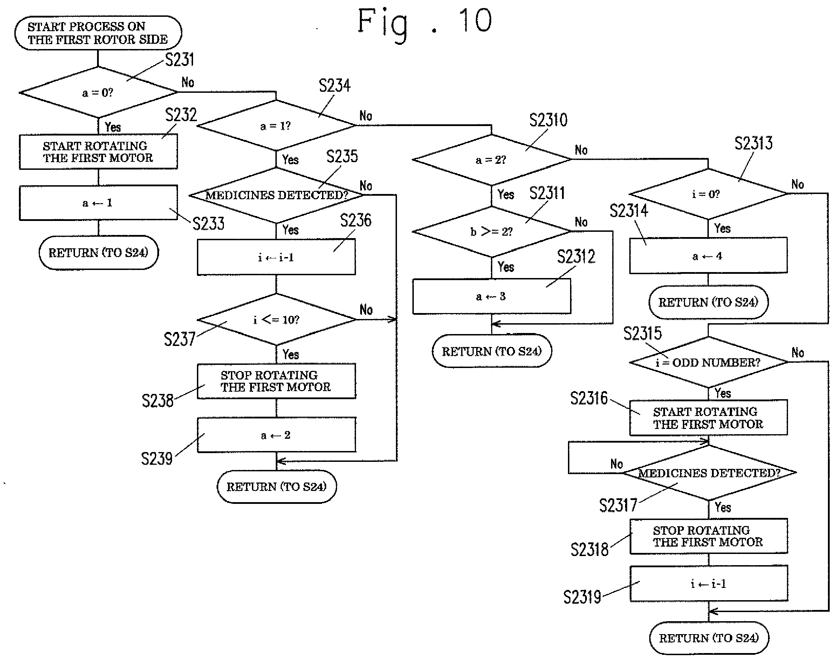

Next, the process of the first rotor 17a (step S23) will be described with reference to Fig. 10. First, whether the variable a is 0 is determined (step S231). If YES is determined, the first motor 21a of the first drive unit 2a starts rotating (step S232). Then, the variable a is set to 1 (step S233). Further, the process proceeds to the process of the second rotor 17b (step S24).

On the other hand, if NO is determined in step S231, whether the variable a is 1 is determined (step S234). If YES is determined, whether the medicine passage sensor 6 has detected the medicines passing through the medicine guide path 4 is determined (step S235). If YES is determined, the variable i is reduced by one (step S236). If NO is determined, the process proceeds to the process of the second rotor 17b (step S24).

Subsequent to step S236, whether the variable i is equal to or less than 10 (in the case where the difference between the designated number and the specific number is set to 10) is determined (step S237). If NO is determined, the process proceeds to the process of the second rotor 17b (step S24). If YES is determined, the first motor 21a of the first drive unit 2a stops rotating (step S238). Then, the variable a is set to 2 (step S239), and the process proceeds to the process of the second rotor 17b (step S24).

If NO is determined in step S234, whether the variable a is 2 is determined (step S2310). If YES is determined, whether the variable b is 2 or more is determined (step S2311). If YES is determined, the variable a is set to 3 (step S2312), and the process proceeds to the process of the second rotor 17b (step S24). If NO is determined, the process proceeds to the process of the second rotor 17b (step S24).

If NO is determined in step S2310, whether the variable i is 0 is determined (step S2313). If YES is determined, the variable a is set to 4 (step S2314), and the process proceeds to the process of the second rotor 17b (step S24). If NO is determined, whether the variable i is an odd number is determined (step S2315).

If YES is determined in step S2315, the first motor 21a of the first drive unit 2a starts rotating (step S2316). Next, whether the medicine passage sensor 6 has detected the medicines passing through the medicine guide path 4 is determined (step S2317). If YES is determined, the first motor 21a of the first drive unit 2a stops rotating (step S2318). Then, the variable i is reduced by one (step S2319), and the process proceeds to the process of the second rotor 17b (step S24).

If NO is determined in step S2315, the process proceeds to the process of the second rotor 17b (step S24). Further, if NO is determined in step S2317, step S2317 is repeated.

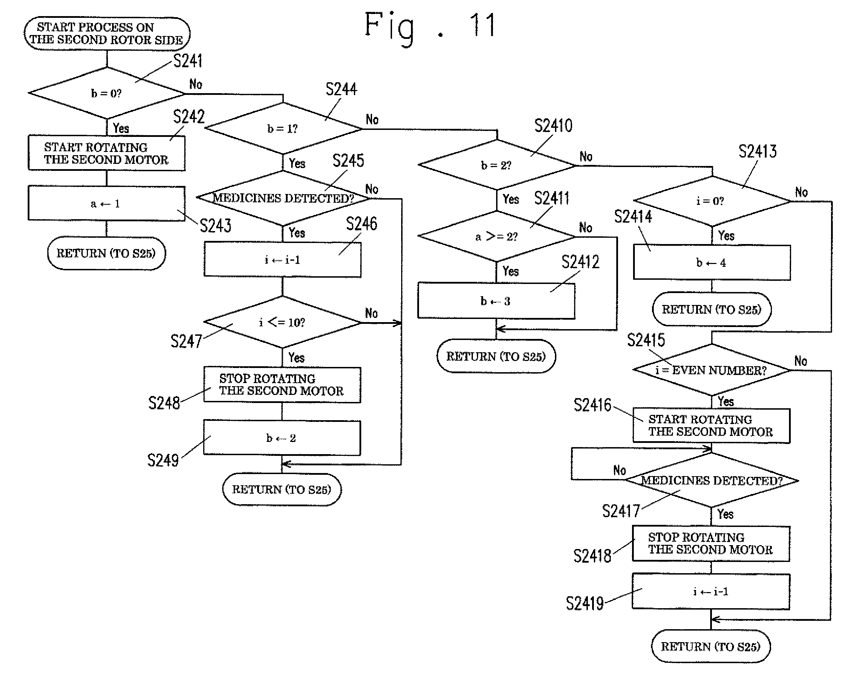

Next, the process of the second rotor 17b (step S24) will be described with reference to Fig. 11. First, whether the variable b is 0 is determined (step S241). If YES is determined, the second motor 21b of the second drive unit 2b starts rotating (step S242). Then, the variable b is set to 1 (step S243). Further, the process proceeds to step S25.

On the other hand, if NO is determined in step S241, whether the variable b is 1 is determined (step S244). If YES is determined, whether the medicine passage sensor 6 has detected the medicines passing through the medicine guide path 4 is determined (step S245). If YES is determined, the variable i is reduced by one (step S246). If NO is determined, the process proceeds to step S25.

Subsequent to step S246, whether the variable i is equal to or less than 10 (in the case where the difference between the designated number and the specific number is set to 10) is determined (step S247). If NO is determined, the process proceeds to step S25. If YES is determined, the second motor 21b of the second drive unit 2b stops rotating (step S248). Then, the variable b is set to 2 (step S249), and the process proceeds to step S25.

If NO is determined in step S244, whether the variable b is 2 is determined (step S2410). If YES is determined, whether the variable a is 2 or more is determined (step S2411). If YES is determined, the variable b is set to 3 (step S2412), and the process proceeds to step S25. If NO is determined, the process proceeds to step S25.

If NO is determined in step S2410, whether the variable i is 0 is determined (step S2413). If YES is determined, the variable b is set to 4 (step S2414), and the process proceeds to step S25. If NO is determined, whether the variable i is an even number is determined (step S2415).

If YES is determined in step S2415, the second motor 21b of the second drive unit 2b starts rotating (step S2416). Next, whether the medicine passage sensor 6 has detected the medicines passing through the medicine guide path 4 is determined (step S2417). If YES is determined, the second motor 21b of the second drive unit 2b stops rotating (step S2418). Then, the variable i is reduced by one (step S2419), and the process proceeds to step S25.

If NO is determined in step S2415, the process proceeds to step S25. Further, if NO is determined in step S2417, step S2417 is repeated.

Hereinbefore, an embodiment of the present invention has been described. However, the present invention is not limited to the above described embodiment, and various modifications can be made without departing from the gist of the present invention.

For example, the medicines serving as objects with which the medicine container B is filled are not limited to tablets, and the present invention can be applied generally to solid medicines such as capsules. Further, the medicines are not limited to the prescription medicines and may be medicines that do not need a prescription by a doctor. Further, the "medicines" are not limited to those having medicinal properties and include solid nutritional supplements (supplements), for example. Further, three or more rotors may be provided for one unit of the medicine cassette 1. Further, a processing unit configured to process the detection signals of the medicine passage sensor 6 can be provided independently of the control unit 3. Further, in the aforementioned embodiment, the rotational speed of the rotor 17 is constant until the processing unit 7 determines that the cumulative number of the medicines passing through the medicine guide path 4 has reached the specific number close to the designated number, but there is no limitation to this. The control unit 3 can be configured to adjust (decelerate or accelerate) the rotational speed of rotors. Further, the detection unit (medicine passage sensor) 6 needs only to be capable of detecting the medicines passing through the medicine guide path 4, and is not limited to being provided in the medicine guide path 4. For example, the detection unit 6 can be provided in the medicine cassette 1. Further, a plurality of medicine cassettes 1 can be attached to the body of the medicine filling apparatus. In this case, a plurality of inlets 41 of the medicine guide path 4 are located corresponding to the plurality of medicine cassettes 1. The lines of the medicine guide path 4 merge in the middle, and the outlet 42 that is open into the medicine container B is located at one point. However, for the purpose of contamination prevention or the like, it is possible that not all the lines of the medicine guide path 4 merge in the middle, and outlets 42 are provided at two or more points in the medicine guide path 4.

Finally, the configuration and action of this embodiment will be summarized. This embodiment is a medicine filling apparatus used for filling the medicine container B with solid medicines (tablets) M, the apparatus including: a medicine housing unit (medicine cassette) 1 configured to house the medicines (tablets) M; a plurality of rotors 17 located within the medicine housing unit (medicine cassette) 1 and configured to eject the medicines (tablets) M from the medicine housing unit (medicine cassette) 1 by rotating; a medicine guide path 4 configured to guide the medicines (tablets) M ejected from the medicine housing unit (medicine cassette) 1 by the plurality of rotors 17 to the medicine container B; a drive unit 2 configured to rotationally drive the plurality of rotors 17; and a control unit 3 configured to control the drive unit 2.

According to this configuration, the medicine housing unit (medicine cassette) 1 includes the plurality of rotors 17. Therefore, as compared with a medicine housing unit (medicine cassette) in which only one rotor is provided per unit, high-speed filling is possible at relatively low rotational speed. Therefore, jamming of the medicines (tablets) M within the medicine housing unit (medicine cassette) 1 or the occurrence of counting errors by the medicine passage sensor 6 can be suppressed.

Further, the configuration may be such that the medicine filling apparatus further includes a detection unit (medicine passage sensor) 6 configured to detect the medicines (tablets) M passing through the medicine guide path 4, and the control unit 3 controls the drive unit 2 based on detection signals from the detection unit (medicine passage sensor) 6 so that, when the cumulative number of the medicines (tablets) M passing through the medicine guide path 4 from the start of filling the medicine container B has reached a specific number close to the designated number that has been designated in advance as the number of the medicines (tablets) M with which the medicine container B is filled, one of the plurality of rotors 17 can eject the medicines while the other rotor cannot eject the medicines.

According to this configuration, the drive unit 2 is controlled so that one of the plurality of rotors 17 can eject the medicines while the other rotor cannot eject the medicines. Therefore, the medicines (tablets) M are allowed to fall from the plurality of rotors 17 one by one without falling at a time, thus enabling error-free filling in the designated number.

Further, the control unit 3 can control the drive unit 3 based on detection signals from the detection unit (medicine passage sensor) 6 so that, when the cumulative number of the medicines (tablets) M passing through the medicine guide path 4 from the start of filling the medicine container B has reached a specific number close to the designated number that has been designated in advance as the number of the medicines (tablets) M with which the medicine container B is filled, only one of the plurality of rotors 17 keeps rotating while the other rotor keeps stopping.

Further, the control unit 3 can control the drive unit 3 based on detection signals from the detection unit (medicine passage sensor) 6 so that, when the cumulative number of the medicines (tablets) M passing through the medicine guide path 4 from the start of filling the medicine container B has reached a specific number close to the designated number that has been designated in advance as the number of the medicines (tablets) M with which the medicine container B is filled, the plurality of rotors 17 alternately rotate by shifting the time while the other rotor than the rotating rotor stops.

Further, the number of the plurality of rotors 17 can be two.

As described above, in the medicine filling apparatus according to this embodiment, high-speed filling at relatively low rotational speed is enabled, and therefore jamming of the medicines (tablets) M within the medicine housing unit (medicine cassette) 1 or the occurrence of counting errors by the medicine passage sensor 6 can be suppressed. Therefore, the time required for filling operation can be reduced, and the medicine container B can be filled with the medicines (tablets) M in an exact quantity. Further, a pharmacist or the like needs only to manage the medicine housing unit (medicine cassette) 1 in a single unit, and therefore the management is not complicated.

### REFERENCE SIGNS LIST

- 1:: Medicine housing unit, Medicine cassette
- 17:: Rotor
- 2:: Drive unit
- 3:: Control unit
- 4:: Medicine guide path
- 6:: Detection unit, Medicine passage sensor
- B:: Medicine container
- M:: Medicines, Tablets

## Claims

1. A medicine filling apparatus used for filling a medicine container with solid medicines, comprising:
a medicine housing unit configured to house the medicines;
a plurality of rotors located within the medicine housing unit and configured to eject the medicines from the medicine housing unit by rotating;
a medicine guide path configured to guide the medicines ejected from the medicine housing unit by the plurality of rotors to the medicine container;
a drive unit configured to rotationally drive the plurality of rotors; and
a control unit configured to control the drive unit.

2. The medicine filling apparatus according to claim 1, further comprising:
a detection unit configured to detect the medicines passing through the medicine guide path, wherein
the control unit controls the drive unit based on detection signals from the detection unit so that, when the cumulative number of the medicines passing through the medicine guide path from the start of filling the medicine container has reached a specific number close to the designated number that has been designated in advance as the number of the medicines with which the medicine container is filled, one of the plurality of rotors can eject the medicines while the other rotor cannot eject the medicines.

3. The medicine filling apparatus according to claim 2, wherein
the control unit controls the drive unit based on detection signals from the detection unit so that, when the cumulative number of the medicines passing through the medicine guide path from the start of filling the medicine container has reached a specific number close to the designated number that has been designated in advance as the number of the medicines with which the medicine container is filled, only one of the plurality of rotors keeps rotating while the other rotor keeps stopping.

4. The medicine filling apparatus according to claim 2, wherein
the control unit controls the drive unit based on detection signals from the detection unit so that, when the cumulative number of the medicines passing through the medicine guide path from the start of filling the medicine container has reached a specific number close to the designated number that has been designated in advance as the number of the medicines with which the medicine container is filled, the plurality of rotors alternately rotate by shifting the time while the other rotor than the rotating rotor stops.

5. The medicine filling apparatus according to claim 2, wherein
the number of the plurality of rotors is two.
